# EUROPÄISCHE PATENTANMELDUNG

(11) **EP 3 144 763 A1**
(43) Veröffentlichungstag der Anmeldung: **22.03.2017**
(21) Anmeldenummer: 15185291.0
(22) Anmeldetag: 15.09.2015
(51) Int. Cl.: G05B 19/418

(54) **SYSTEM UND VERFAHREN ZUR STEUERUNG UND/ODER ANALYTIK EINES INDUSTRIELLEN PROZESSES MITTELS EINER ANLAGENEXTERNEN RECHENEINHEIT UND EINEM REVISIONSMODUL FÜR DEN SYSTEMBETREIBER**

(71) Anmelder: Siemens Aktiengesellschaft, 80333 München (DE)
(72) Erfinder: Verma, Amit, 91052 Erlangen (DE)

(57) **Zusammenfassung**

Die Erfindung betrifft ein System (100) zur Steuerung und/oder Analytik eines industriellen Prozesses (1), aufweisend anlagenseitig wenigstens eine Automatisierungs- oder Rechnereinheit (2, 5, 6, 7) eines Systembetreibers, wobei die wenigstens eine Automatisierungs- und Rechnereinheit erste Prozessgrößenberechnungen (19) durchführt und auf den Prozess (1) einwirkt, aufweisend anlagenextern eine Recheneinheit (9) eines vom Systembetreiber verschiedenen Servicebetreibers, wobei die anlagenexterne Recheneinheit wenigstens eine Applikation (31, 32, 33, 34, 35) aufweist und eine Anzahl zweiter Prozessgrößenberechnungen (14) durchführt und über die zweiten Prozessgrößenberechnungen direkt oder indirekt auf den Prozess einwirkt und wobei die anlagenexterne Recheneinheit über eine Datenverbindung (15) lokalen Daten (3, 4, 12, 19) von der wenigstens einen Automatisierungs- oder Rechnereinheit (2, 5, 6, 7) erhält und in einem Primärspeicher (26) speichert. Die anlagenexterne Recheneinheit (9) weist ein Revisionsmodul (24) auf, das den Zugriff der wenigstens einen Applikation auf den Primärspeicher protokolliert.

## Beschreibung

Die Erfindung betrifft ein System und ein Verfahren zur Steuerung und/oder Analytik eines industriellen Prozesses eines Systembetreibers mittels einer anlagenexternen Recheneinheit und einem Revisionsmodul für den Systembetreiber innerhalb der anlagenexternen Recheneinheit.

Eine Vielzahl von Anlagen, die eine Prozesssteuerung vornehmen, erfüllt in der Regel automatisierungs- und regelungstechnische Aufgaben. Diese Aufgaben werden in der Regel von Automatisierungseinheiten durchgeführt, die Vor-Ort und damit in der Nähe des zu automatisierenden Prozesses installiert. Solche Automatisierungseinheiten sind aufgrund ihrer eingeschränkten Rechenleistung eher nicht in der Lage komplexe Regelungsstrukturen oder Regelungs- und/oder Simulationsstrategien abzubilden, wie sie in Automatisierungsgeräten der höheren Klassen möglich sind. Solche komplexeren Regelungsstrategien, die eine erhebliche Rechenkapazität benötigen können, können beispielsweise sogenannte modellprädiktive Regelungen (Model Predictive Control, MPC) sein, wie sie bevorzugt in verfahrenstechnischen Prozessen eingesetzt werden. Häufig besteht auch der Wunsch komplexe Regelungen einzurichten, die auf umfangreichen historischen Daten aufbauen und diese beispielsweise in sog. Support Vector Machines (SVM) zu nutzen, um auf dieser Basis Optimierungen am Prozess vornehmen zu können. Deshalb werden solche rechenintensiven verfahrenstechnische Prozesse oder Datenanalysemodelle häufig im übergeordneten Steuerungs-, und Überwachungssystem der Anlage automatisiert.

Wir erleben aktuell einen Trend in Richtung zentraler Datenanalytik in externen Rechnereinheiten (sog. cloud based analytic). Mit diesen externen Rechnereinheiten können Prozesssteuerungen für eine industrielle Anlage Cloud-basiert durchgeführt werden kann, indem die Prozessdaten von einer Anlage gesammelt werden, um sie dann einer externen Recheneinheit zur Analyse bereitzustellen. Das Analyseergebnis wird zur Verbesserung der Prozesssteuerung und Prozessoptimierung an die Anlage zurückgesendet. Aufgrund seiner umfangreichen Analytikmethoden und der meist selbstlernenden Techniken erlaubt die Cloud-basierte Analytik eine wesentliche Verbesserung der Prozesssteuerungen. Ferner werden historische Daten, die über einen längeren Zeitraum gesammelt werden zur Analyse in einer externen Rechnereinheit gespeichert. Die externe Rechnereinheit kann aber auch Daten eines MES (Manufacturing Execution Systems) oder ERP-System (Enterprise resource planning) umfassen. Solche MES oder ERP-Systeme besitzen einen weiten Funktionsumfang, wobei deren Funktionen ebenso auf den unterschiedlichsten Prozessdaten und Prozessgrößenberechnungen basieren. Auch die in diesen Systemen vorliegenden Zwischendaten, die einer weiteren Verarbeitung unterliegen können Relevanz für die Prozesssteuerung erhalten. Während Prozessgrößenberechnungen der Automatisierungseinheiten i.d.R direkt auf den industriellen Prozess einwirken (beispielsweise durch Sollwertvorgaben für einen Regler) wirken die Prozessgrößenberechnungen von MES oder ERP-Systemen eher indirekt auf den industriellen Prozess ein, indem das MES für das Terminieren von Produktionsprozessen verantwortlich zeigt beispielsweise durch die Bestimmung des Produktionsplanes durch Sammlung von Aufträgen, oder indem ein MES eine Überprüfung und das Management von Ressourcen ausführt, um die Produktion vorzubereiten oder Produktionsbestellungen mit den notwendigen materiellen Ressourcen durchzuführen und/oder andere System über den Fortschritt des Produktionsprozesses zu informieren. Oder ein Einwirken auf den Prozess erfolgt indirekt durch den Austausch von Prozessdaten, der Statusanalyse von Betriebseinrichtungsgegenständen, Materialverbrauchsinformationen oder historischen oder aktuellen Produktionsdaten.

Vorgenannte Daten eines Prozesses sind sensible Daten des Systembetreibers, dennoch sollen sie vielfach in externen Recheneinheiten abgelegt werden, die öffentliche oder sogenannte hybride Clouds darstellen. Damit gelangen diese Daten aus dem unmittelbaren Verantwortungs- und Zugriffsbereich des Systembetreibers, was als problematisch angesehen wird. Hinzu kommt, dass eine solche öffentliche oder hybride Cloud auch Daten von unterschiedlichen Systembetreibern und Unternehmen speichert und bearbeitet. Außerdem unterliegen Firmenorganisationen hinsichtlich ihres Datenhandlings ihren eigenen unterschiedlichen Sicherheitsbestimmungen, diese können von übergeordneten Sicherheitsbestimmungen beeinflusst sein, die sich von Land zu Land aufgrund von Gesetzesvorgaben unterscheiden können. Sobald die Daten die Grenzen der Unternehmen verlassen, kann es für die Unternehmen schwierig sein, die Einhaltung von Vorschriften durchzusetzen.

Anbieter von Cloud-basierten Applikationen oder von Clouds als solche, kennen das Problem, dass Kunden sich beklagen, nicht genügend Transparenz darüber zu erhalten, welche ihrer Daten in welchem Umfang gespeichert werden und wie diese durch den Anbieter genutzt werden. Dies führt dazu, dass Kunden sich schwer tun Cloud-basierte Serviceangebote anzunehmen und zu akzeptieren.

Die Revision von Daten eines Unternehmens kann für Daten, die sich innerhalb der Unternehmensgrenzen befinden, leicht durchgeführt werden, für Daten die sich in einer Cloud befinden - noch dazu eines anderen Anbieters - kann dies weit problematischer sein.

Klare Lösungen für die beschriebene Problematik existieren derzeit nicht. Cloud-basierte Serviceanbieter konfigurieren ihre Datensammler so, dass sie nur relevante und vertragskonforme Daten sammeln. Dennoch wünschen sich Kunden mehr Transparenz darüber, welche Daten in der Cloud gespeichert sind und sie wünschen sich mehr Kontrolle darüber wie die Daten genutzt und innerhalb der Cloudanwendung verarbeitet werden. Eine solche Kontrolle ist aber noch aus einem anderen Grund problematisch. Die Cloud-basierte Speicherung von Daten ist heterogen. Öffentliche oder hybride Cloud-Systeme speichern Daten von unterschiedlichen Unternehmen innerhalb einer Cloud mit Hilfe von Datensammlern oder Datenübermittlern (agentenbasiert oder agentenlos). Dabei können die Unternehmensdaten in der Cloud in verschiedenen Datenspeichern gespeichert sein. Die Datenspeicher können Datenbanken sein (SQL, Oracle, MS-Access etc.), Dateisysteme (Dateien verschiedenen Typs), Daten Archive, große Datenspeichern (Hadoop cluster, NoSQL, MongoDB, Rabbit, etc.), Caches usw. Auf der einen Seite können die Daten verschiedener Unternehmen in hinsichtlich der Organisationen getrennten Modellen gespeichert sein (sog. perfect multi-tenant models). Nach diesem Modell erfolgt eine Zusammenfassung und Kapselung streng nach den Unternehmen. Die Datenspeicher sind getrennt, jede Organisation hat ihre eigene SQL Datenbank und ihr eigenes Dateiensystem. Auf der anderen Seite können Daten in hinsichtlich der Datenspeicher getrennten Modellen organisiert sein, d.h. die SQL Datenbank und/oder das Dateisystem umfassen die Daten verschiedener Unternehmen (sog. mixed multi-tenant models)

Neben den vorbeschriebenen Problemen hinsichtlich der Transparenz von Daten in der Cloud, also wissen zu wollen, welche seiner Daten sich zu welchem Zeitpunkt mit welchem Detaillierungsgrad in der Cloud befinden, sehen sich Systembetreiber auch dem Problem konfrontiert nicht zu wissen wie diese, seine Daten in der Cloud verwendet werden.

Daten in einer Cloud werden aber oft repliziert. Kopien von Daten werden von Anwendungen, die diese Daten nutzen, in temporären Puffern, Speicherbereichen oder Dateien geschrieben. Kopien von Daten werden ferner in Back-ups vorgehalten. Kopien von Daten werden auch dann gemacht, wo mit den Mitteln von "big data" Technologien weiterführende Analysen gemacht werden sollen. Das Problem wird also noch virulenter, wenn die Cloud gerade auch Prozessdaten durch verschiedene Applikationen verarbeitet, wie beispielsweise Condition Monitoring oder weiterführende Big-Data-Analysen.

Probleme können sich auch dann ergeben, wenn ein Organisation oder ein Systembetreiber einer industriellen Anlage den Serviceprovider und damit auch die Cloudinfrastruktur wechselt. Nachdem die Daten mehrmals und ggf. auf verschiedenen Speichermedien vervielfältigt worden sind, ist es nahezu unmöglich dem Eigentümer der Daten zuzusichern, dass seine Daten komplett gelöscht worden sind. Kopien könnten sich in temporären Speichern, Back-up Archiven oder Hadoop Clustern befinden.

Ausgehend von den vorbeschriebenen Problemen ist es demnach Aufgabe der Erfindung ein System zur Steuerung und/oder Analytik eines industriellen Prozesses mittels einer anlagenexternen Recheneinheit anzugeben, welches die Transparenz und Kontrolle gegenüber demjenigen verbessert, der die Daten zur Verfügung stellt. Insbesondere ist es Aufgabe die Transparenz darüber herzustellen, wie die Daten genutzt und verwaltet werden.

Die Aufgabe wird gelöst durch ein System mit den Merkmalen des Anspruchs 1 und eine Vorrichtung mit den Merkmalen des Anspruchs 5.

Danach weist das System zur Steuerung eines industriellen Prozesses anlagenseitig wenigstens eine Automatisierungs- oder Rechnereinheit eines Systembetreibers auf. Bei der industriellen Anlage kann es sich um jedwede Anlage mit einem Produktions- oder Fertigungsprozess im industriellen Umfeld handeln. Anlagenseitig heißt, dass die Automatisierungs- oder Rechnereinheit Bestandteil des originären Automatisierungssystems ist und in der Regel prozessnah angeordnet ist. Die Automatisierungseinheit führt eine Vielzahl erster Prozessgrößenberechnungen durch. Dazu ist die Automatisierungseinheit mittels Sensoren und Aktoren in den Prozess eingebunden. Prozesseingangsvariablen sind die Sensoren und Aktoren, die für die Steuerung des Prozesse vom Eingangsbaustein der Automatisierungseinheit in der Regel zyklisch eingelesen und zwischengespeichert werden und somit einer weiteren softwaretechnischen Verarbeitung durch die Prozessoren der Automatisierungskomponenten zur Verfügung stehen. Die konkrete softwaretechnische Verarbeitung innerhalb der Automatisierungseinheit erfolgt nach einem Prozesssteuerungs-Algorithmus. Die Ausgangsgrößen dieser Verarbeitung, d.h. die Ergebnisse des Prozesssteuerungs-Algorithmus der anlagenseitigen Automatisierungseinheit werden über einen Ausgangsbaustein der Automatisierungseinheit in der Regel ebenfalls zyklisch prozesswirksam. Die anlagenseitige Rechnereinheit kann aber auch ein MES (Manufacturing Execution Systems) oder ERP-System (Enterprise resource planning) sein. Auch die in diesen Systemen vorliegenden Zwischendaten, die einer weiteren Verarbeitung unterliegen, sollen dem hier verwendeten Begriff der ersten Prozessgrößenberechnungen unterfallen. Während die Prozessgrößenberechnungen der Automatisierungseinheiten i.d.R. direkt auf den industriellen Prozess einwirken (beispielsweise durch Sollwertvorgaben für einen Regler) wirken die Prozessgrößenberechnungen von MES oder ERP-Systemen eher indirekt auf den industriellen Prozess ein, indem das MES für das Terminieren von Produktionsprozessen verantwortlich zeigt beispielsweise durch die Bestimmung des Produktionsplanes durch Sammlung von Aufträgen, oder indem ein MES eine Überprüfung und das Management von Ressourcen ausführt, um die Produktion vorzubereiten oder Produktionsbestellungen mit den notwendigen materiellen Ressourcen durchzuführen und/oder andere System über den Fortschritt des Produktionsprozesses zu informieren. Oder ein Einwirken auf den Prozess erfolgt indirekt durch den Austausch von Prozessdaten, der Statusanalyse von Betriebseinrichtungsgegenständen, Materialverbrauchsinformationen oder historischen oder aktuellen Produktionsdaten.

Das System weist weiter wenigstens eine anlagenexterne Recheneinheit (Cloud-Recheneinheit) auf, die mit den auf ihr ablaufenden Applikationen zweite Prozessgrößenberechnungen durchführt und dazu über eine Datenverbindung lokale Daten von der anlagenseitigen Automatisierungs- oder Rechnereinheit erhält. Diese lokalen Daten sind Daten des Systembetreibers. Die Datenverbindung wird über bekannte Kommunikationsmechanismen und standardisierte Schnittstellen realisiert. Zu den Kommunikationsmechanismen gehören beispielsweise die Kommunikationsstandards OPC (OPC DA, OPC UA) oder TCP/IP (Profinet), die den Zusammenschluss unabhängiger Recheneinheiten zu einem verteilten System erlauben. Zu den Standard Schnittstellen RPC, OLEDDB oder SQL. Als anlagenextern soll eine Recheneinheit angesehen werden, wenn sie räumlich und/oder funktional außerhalb des originären Automatisierungssystems angesiedelt ist und im Verantwortungsbereich eines Serviceanbieters ist und damit den Verantwortungsbereich des Systembetreibers verlassen hat.

Die anlagenexterne Recheneinheit weist wenigstens eine Applikation auf und führt parallel oder zusätzlich zur Berechnung der ersten Prozessgrößenberechnungen der anlagenseitigen Automatisierungs- oder Recheneinheit zweite Prozessgrößenberechnungen durch. Die komplexeren, zweiten Prozessgrößenberechnungen werden dabei in der Regel auch auf eine größere Menge von Daten fußen. Sofern diese Daten vom Prozess selbst bereitgestellt werden können (beispielsweise durch zusätzliche und bis dahin nicht genutzte Sensoren oder Aktoren), werden diese ebenfalls über die anlagenseitige Automatisierungseinheit eingelesen und bereitgestellt. Solche lokalen Daten können aber auch historische Daten oder Zwischendaten umfassen, wie sie beispielsweise innerhalb der anlagenseitigen Automatisierungs- oder Rechnereinheit selbst vorliegen. Die Berechnungen, die in der anlagenexternen Recheneinheit durchgeführt werden, sind i.d.R. weit komplexer und rechenintensiver als diejenigen, die in der anlagenseitigen Automatisierungseinheit durchgeführt werden können. So übernimmt die externe Recheneinheit erweiterte regelungstechnische Funktionen, wie sie beispielsweise von MPC-Reglern bekannt sind. Wegen der höheren Anzahl von Daten, insbesondere historischer Daten können die Prozesssteuerungs-Algorithmen beispielsweise auch sog. Support Vector Machines (SVM) basierten Model Predictive Control (MPC) Algorithmen umfassen. Über die zweiten Prozessgrößenberechnungen kann die anlagenexterne Recheneinheit direkt auf den Prozess einwirken, die zweiten Prozessgrößenberechnungen können direkt im Prozess wirksam werden. Weiterhin können Applikationen auf der anlagenexternen Recheneinheit laufen die Condition Monitoring Systeme, Simulationssysteme oder Historiensysteme abbilden und innerhalb dieser anlagenexternen Recheneinheit zusätzliche Auswertungen und Analytiken durchführen und zu diesem Zwecke auch auf lokale Daten in der Automatisierungs- und Rechnereinheit zurückgreifen. Insoweit sollen die genannten zweiten Prozessgrößenberechnungen auch Berechnungen auf Basis von lokalen Daten umfassen, die nicht unmittelbar regelnd oder steuernd auf den Prozess zurückwirken, sondern von Applikationen zu anderen Zwecken beispielsweise zu Auswertezwecken dem Systembetreiber bereitgestellt werden sollen und insofern indirekt auf den Prozess einwirken, indem sie diesen sicherer oder effektiver machen können. Die lokalen Daten werden mit Eingang in die anlagenexterne Recheneinheit in einem Primärspeicher abgelegt, auf den die Applikation zur Ausführung ihres Programmes zugreift. Ein solcher Primärspeicher kann als perfect oder mixed multi-tenant model aufgebaut sein.
Die anlagenexterne Recheneinheit weist nunmehr ein Revisionsmodul auf, wobei das Revisionsmodul den weiteren Zugriff durch eine Applikation auf den Primärspeicher protokolliert. Unter Protokollieren sind in diesem Zusammenhang das unmittelbare Mitschreiben von Ereignissen (lesenden, schreibenden) und die weitere Verarbeitung, Nutzung für jedes im Primärspeicher abgelegte Datum zu verstehen. Die Zugriffe werden durch die Applikationen also den einzelnen Programmen, welche innerhalb der anlagenexternen Recheneinheit laufen ausgelöst.

Nach einer Variante protokolliert das Revisionsmodul nicht nur den Zugriff auf die Daten des Primärspeichers sondern zusätzlich auch den Zugriff auf die Sekundärspeicher. Unter Sekundärspeicher sind dabei von den Applikationen verwendete Zwischenspeicher zu verstehen. Diese können beispielsweise Hadoop Stores, temporäre Dateien und Puffer sowie Back-up Systeme sein. Dabei können unterschiedliche Applikationen alternativ oder auch kumulativ auf Sekundärspeicher zugreifen.

Nach einer Variante umfasst das Revisionsmodul wenigstens eine Protokolldatei, welche die Zugriffe mit wenigstens den Parametern Benutzer(Benutzergruppe), Datenkategorie, Vervielfältigung mitschreibt. Auf diese Weise entsteht eine Aufzeichnung darüber, wo, welche Daten, wie verwendet worden sind und in welchen Speicherbereich diese ggf. vervielfältigt worden sind. Der Eintrag für den "Benutzer" oder die "Benutzergruppe" ist dann sinnvoll, wenn die Daten in der anlagenexterne Recheneinheit nicht nur vom Servicebetreiber der anlagenexternen Recheneinheit benutzt werden, sondern wenn eine Reihe andere Benutzer mit z.T. eigenen Applikation auf die Daten zugreifen sollen. So ist es denkbar, dass Partner des Servicebetreibers für bestimmte Services und/oder Analysen auch auf die Daten des Systembetreibers zugreifen sollen. Der Partner soll ggf. sogar abhängig von seinen Analysen sogar Zugriff auf Daten verschiedener Servicebetreiber haben. Andere Fälle sind denkbar, in denen beispielsweise Benutzer für sehr spezielle Anwendungsfälle Zugang zu diesen Daten haben sollen. Beispielsweise könnte ein Benutzer mit der Rolle "Human Resource" definiert worden sein und Zugriff auf bestimmte Personaldaten erhalten haben.
Über die "Datenkategorie" wird protokolliert, welche Gruppe von Daten eine weitere Verarbeitung oder Vervielfältigung erfahren hat. Auf diese Weise lässt sich vorteilhaft überprüfen, ob ein Benutzer in seiner Rolle tatsächlich nur auf erlaubte Daten zugegriffen und diese weiterverarbeitet hat. Der Eintrag für die "Vervielfältigung" protokolliert, ob und wenn ja in welchem Speicherbereich eine Vervielfältigung festgestellt worden ist. Falls ein vervielfältigtes Datum wieder auf einem Speicherbereich, vorzugsweise aus einem sekundären Speicherbereich gelöscht worden ist, wird die Protokolldatei entsprechend aktualisiert. Über die Protokolldateien behält der Systembetreiber oder die Organisation, die Eigentümer der Daten ist, den Überblick welche seiner Daten, wann von wem verarbeitet und ggf. dupliziert worden sind.

Nach einem weiteren Aspekt erhält der Systembetreiber oder Eigentümer der Daten einen Zugriff von außerhalb der anlagenseitigen Automatisierungs- und Rechnereinheit. Ein Zugriff außerhalb der anlagenseitigen Automatisierungs- und Rechnereinheit meint einen unabhängigen Zugriff durch den Systembetreiber, in erster Linie den zeitlich und örtlich unabhängigen Zugriff durch den Systembetreiber, d.h. auch dann, wenn die anlagenexterne Recheneinheit Steuerungs- oder Analytikfunktionen ausführt. Der Dateneigentümer kann nun zu jeder Zeit einen kompletten Überblick darüber erlangen welche Daten bzw. Kategorien von Daten in der anlagenexternen Recheneinheit durch welchen Benutzer wohin vervielfältigt worden ist. Dies ist vorteilhaft für beide, den Systembetreiber und den Servicebetreiber. So kann der Systembetreiber das Revisionsmodul für Compliance-Zwecke nutzen, der Servicebetreiber kann gegenüber dem Systembetreiber nachweisen, dass er nur die ggf. vertraglich vereinbarte Bewegung der Daten erfolgt.

Die Aufgaben wird weiterhin gelöst durch eine anlagenexterne Recheneinheit zur Steuerung und/oder Analytik wenigstens eines industriellen Prozesses eines Systembetreibers. Die anlagenexterne Recheneinheit weist eine oder mehrere Applikationen auf und führt Prozessgrößenberechnungen für den wenigstens einen industriellen Prozess auf Basis von lokalen Daten durch. Über eine Datenverbindung erhält die anlagenexterne Recheneinheit diese lokalen Daten von einer anlagenseitigen Automatisierungs- und Rechnereinheit, die in einem Primärspeicher der anlagenexternen Recheneinheit abgelegt sind. Die anlagenseitige Automatisierungs- und Rechnereinheit weist ein Revisionsmodul auf, welches den Zugriff der einen oder mehrerer Applikationen auf den Primärspeicher protokolliert. Durch das Protokollieren werden somit alle lesenden und schreibenden Zugriffe, d.h. alle Aktivitäten von Applikationen bezogen auf den Primärspeicher mitgeschrieben. Damit kann die weitere Verarbeitung und Nutzung für jedes im Primärspeicher abgelegte Datum erfasst werden.

Üblicherweise weist die Infrastruktur der anlagenexternen Recheneinheit neben dem vorgenannten Primärspeicher auch weitere Speicherbereiche auf, die von Applikationen bei der Abarbeitung ihres Programms genutzt werden. Nach einem weiteren Aspekt der Erfindung werden auch diese als Sekundärspeicher bezeichneten Speicher vom Revisionsmodul erfasst und auch die Zugriffe auf diese Sekundärspeicher werden protokolliert. Auf diese Weise wird eine vollständige Protokollierung aller Aktivitäten der Applikationen bezogen auf die Speicherbereiche sichergestellt und damit ein umfängliches Protokoll bezüglich der Aktivitäten für spätere Auswertungen erstellt.

Weitere Ausführungsformen sind Gegenstand der abhängigen Ansprüche.

Die oben beschriebenen Eigenschaften, Merkmale und Vorteile dieser Erfindung sowie die Art und Weise, wie diese erreicht werden, werden in Verbindung mit den Figuren näher erläutert. Hierbei zeigen in schematischer Darstellung:
- Fig. 1: ein System für eine verteilte Prozesssteuerung einer industriellen Anlage mit einer anlagenexternen Recheneinheit
- Fig. 2: eine Funktionsweise eines Revisionsmoduls innerhalb einer anlagenexternen Recheneinheit
- Fig. 3: einen möglichen Ausschnitt aus einer Log-Datei für den Systembetreiber

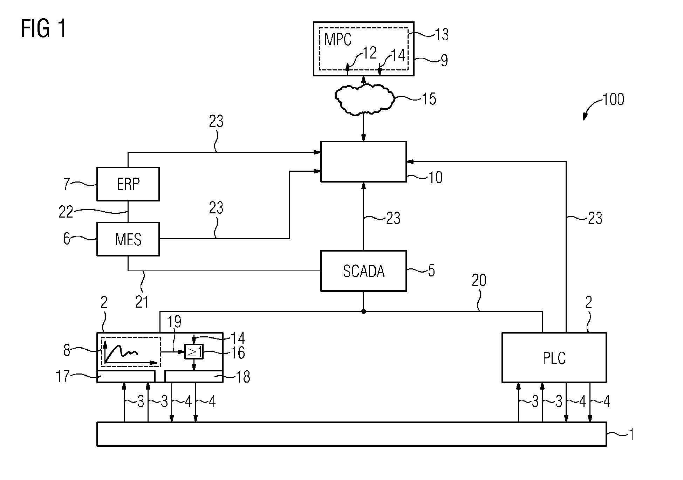

Fig.1 zeigt ein System 100 zur Steuerung des industriellen Prozesses 1, der ein beliebiger Fertigungsprozess in der verarbeitenden Industrie sein kann. Der industrielle Prozess kann ein Prozess sein, der innerhalb eines Standortes abläuft, oder aber über mehrere Standorte hinweg. Der Prozess 1 wird gesteuert und geregelt über dezentrale, anlagenseitige Automatisierungseinheiten 2. Diese sind mit einem oder mehreren hier nicht dargestellten Prozessoren ausgestattet, die in Zusammenwirken mit den notwendigen Zwischenspeichern die in Softwarecode hinterlegten Befehlsanweisungen abarbeiten. Die Befehlsanweisungen beziehen sich auf sämtliche Prozesssteuerungs-Algorithmen zur Steuerung und Regelung des Prozesses sowie auf die Daten-Kommunikation zwischen den Einheiten. Die Automatisierungseinheit 2 weist zur Steuerung und Regelung des Prozesses eine Reihe von Wirkverbindungen 3 zu in Figur 1 nicht näher dargestellten Sensoren oder Aktoren aufweisen. Über diese Verbindung liest der Eingangsbaustein 17 die lokalen Daten ein, die danach in einem Speicherbereich der Automatisierungseinheit vorliegen. Über die Wirkverbindungen 4 werden Steuerkommandos vom Ausgabebaustein 18 zu in Figur 1 nicht näher dargestellten Aktoren des Prozesses realisiert. Beispielhaft sind zwei Automatisierungseinheiten 2 gezeigt, in der Praxis werden mehrere Automatisierungseinheiten den Prozess steuern, regeln und überwachen. Über eine Datenverbindung 20 sind die Automatisierungseinheiten 2 mit dem Überwachungssystem 5 verbunden, welches die Steuerung und Überwachung des Prozesses 1 übernimmt. Das Überwachungssystem 5 (SCADA) unterhält eine Datenverbindung 21 zu dem Manufacturing Execution System 6 welches wiederum eine Datenverbindung 22 zum einem Enterprise Resource Planning-System 7 unterhält. Das Manufacturing Execution System 6 und das Enterprise Resource Planning System 7 können auch über die Datenverbindung 20 mit dem Überwachungssystem 5 kommunizieren. Die Automatisierungseinheiten 2 führen auf Basis der über Wirkverbindung 3 generierten lokalen Daten Prozesssteuerungs-Algorithmen 8 aus. Das sind prozesswirksame Überwachungsanalysen und Regelungsfunktionen, die i.d.R. einfachere und weniger komplexe Analyse- und Regelungsaufgaben beinhalten. Das Ergebnis dieses Prozesssteuerungs-Algorithmus wird als Prozessgrößenberechnung 19 in der Automatisierungseinheit 2 zur weiteren Verwendung vorgehalten und soweit nicht benötigt in einem nächsten Zyklus überschrieben. Die Prozessgrößenberechnung 19 werden aber ebenso durch Berechnungen innerhalb der übergeordneten Systeme 5, 6, 7 beeinflusst. So können beispielsweise Planungsvorgaben basierend auf Kundenbestellungen oder Materiallieferungen aus MES und ERP-System dazu führen, dass bestimmte Fertigungsprozesse langsamer, energieoptimierter oder schneller ausgeführt werden sollen. Das SCADA kann beispielsweise aufgrund von Störungen an andere Stelle des Fertigungsprozesses (beispielsweise der Verpackungsabteilung) einen vorgelagerten Fertigungsprozess (beispielsweise die Abfüllung) ebenfalls beeinflussen.
In dieser Konfiguration ist das System 100 funktionsfähig und kann seine Steuer-, Regelungs- und Überwachungsaufgaben erfüllen.

Das System 100 ist erweitert durch eine anlagenexterne Recheneinheit 9. Diese ist mit einem oder mehreren hier nicht dargestellten Prozessoren ausgestattet, die in Zusammenwirken mit den notwendigen Zwischenspeichern die in Softwarecode hinterlegten Befehlsanweisungen abarbeiten. Die Befehlsanweisungen beziehen sich auf sämtliche Prozesssteuerungs-Algorithmen zur Steuerung, Regelung und Analytik des Prozesses sowie auf die Daten-Kommunikation zwischen den Einheiten. Die Recheneinheit 9 ist über eine Datenverbindung 15 und dem Gateway 10 mit den anlagenseitigen Automatisierungs- und Recheneinheiten verbunden Die Datenverbindung 15 wird bevorzugt über das Internet entweder kabelgebunden oder drahtlos realisiert. Das Gateway 10 kann eine Datensammlereinheit sein, die von den Automatisierungs- und Rechnereinheiten 2, 5, 6, 7 über die Datenverbindung 23 alle lokale Daten erhält, die in der Recheneinheit 9 für die dort ablaufenden vorgenannten Prozessteuerungs-Algorithmen zur Steuerung, Regelung und Analytik des Prozesses 1 notwendig sind. Die gezeigte Datenverbindung 23 ist funktional zu verstehen, physisch kann diese ein eigenes Netzwerkt sein, oder es wird die Datensammlereinheit 10 auf ein bestehendes Netzwerk innerhalb des Systems 100, beispielsweise 20, 21 aufgeschaltet. Die anlagenexterne Recheneinheit 9 führt auf Basis von Eingangsprozessvariablen 12, die vom Gateway 10 bereitgestellt werden und die im wesentlichen basieren auf die über die Wirkverbindung 3 generierten Daten Prozesssteuerungs-Algorithmen 13 durch und gibt Ergebnisse 14 dieser Berechnungen aus. Die Eingangsprozessvariablen 12 können ebenso basieren auf den historischen Daten, die in der Automatisierungseinheit 2 vorliegen. Alternativ oder zusätzlich können die Eingangsprozessvariablen 12 auf historischen Daten, die in der Recheneinheit 9 selbst vorliegen basieren. Beispielhaft stellt Fig. 1 als Prozesssteuerungs-Algorithmus 13 eine MPC Regelstruktur dar. Aber auch umfangreichere Datenanalytik kann Gegenstand des vorgenannten Algorithmus sein und die Ergebnisse 14 sind Ergebnisse solcher Analytikfunktionen. Die Ergebnisse 14 werden an die die Automatisierungs- und Rechnereinheiten 2, 5, 6, 7 übertragen. Dazu kann der Kommunkationspfad über das Gateway 10 benutzt werden oder es wird alternativ ein hier nicht dargestellter separater Kommunikationspfad genutzt. Sollen die Ergebnisse 14 auf den Prozess 1 direkt einwirken, so entscheidet innerhalb der Automatisierungseinheit 2 der Überprüfungsbaustein 16 darüber, ob die Ergebnisse 14 über den Ausgabebaustein 18 prozesswirksam werden. Alternativ können Ergebnisse 14 aber auch die einer Datenanalytik beispielsweise eines Condition Monitoring Systems sein und lediglich an die Rechnereinheiten 6,7 übertragen werden. In diesem Fall können solche Ergebnisse von Anlaytikfunktionen auch dem ERP oder MES zur Verfügung gestellt werden, wenn es beispielsweise darum geht, dass die Analytikfunktion den Ausfall eines Bauteils im Rahmen von Condition Monitoring bestimmt. Denkbar ist auch, dass Ergebnisse lediglich innerhalb der externen Recheneinheit 9 abgelegt und vorgehalten werden und für weitere Auswertungen verfügbar gemacht werden.

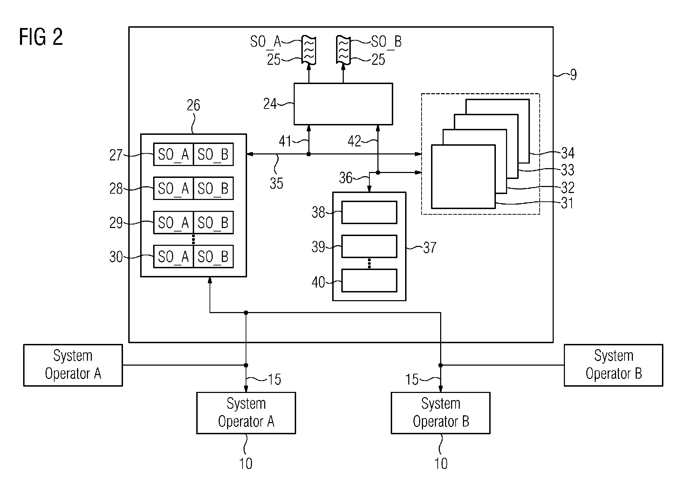

Fig. 2 zeigt schematisch die Funktionsweise des Revisionsmoduls 24 innerhalb der anlagenexternen Recheneinheit 9. Über das Gateway 10 des jeweiligen Systembetreibers SO_A, SO_B (System Operator A, System Operator B) werden über die Datenverbindung 15 die lokalen Daten der anlagenseitigen Automatisierungs- und Rechnereinheiten 2, 5, 6, 7 mittels Agenten transferiert. Die Daten der Systembetreiber werden in einem Primärspeicher 26 in der anlagenexternen Recheneinheit 9 abgelegt. Der Primärspeicher soll physisch nicht als ein einziger Speicher verstanden werden. Er kann vielmehr eine Reihe verschiedene Speichermedien umfassen, wie beispielsweise Datenbanken 27, Dateiensysteme 28, In-Memory Datenbanken 29, Archive 30 usw. Der Primärspeicher 26 kann - sofern wie in diesem Aufführungsbeispiel die anlagenexterne Recheneinheit mit Datenquellen mehrerer Systembetreiber verbunden ist. Beispielhaft zeigt Fig. 2 die Ablage der Daten in einer Datenbank und in einem Dateiensystem in mixed multi-tenant Modell. Alternativ können die Daten auch in einem perfect multi-tenant Modell abgelegt werden, d.h. mit eigener Datenbank und/oder Dateiensystem für die Daten des jeweiligen Systembetreibers. Auf die Daten des Primärspeichers greifen die Applikationen 31, 32, 33, 34 lesend und ggf. auch schreibend zu. Die lesenden und schreibenden Zugriffe der Applikationen auf die Daten des Primärspeichers sind durch den Pfeil 35 dargestellt. Die cloudbasierten Applikationen 31 bis 34 greifen auf die Daten des Primärspeichers zu, um diese weiterzuverarbeiten, zu analysieren oder über Benutzerschnittstellen zu visualisieren. Die Applikationen 31, 32, 33, 34 können Applikationen des Servicebetreibers oder eines weiteren Servicepartners oder auch des Systembetreibers selbst sein. Beispielsweise kann es sich bei der Applikation 31 um eine Applikation für ein Condition Monitoring 31 handeln, welche Daten zum Status von Maschinen aus dem Primärspeicher liest, dann in einen temporären Speicher für eine schnelle Fourier Transformation verarbeitet und die Zwischenergebnisse einer weiteren Analyse für Vorschläge zur vorbeugenden Wartung unterzieht. Eine Applikation 32 zur Umsatzprognose liest historische Daten aus dem Primärspeicher und kopiert sie in einen Hadoop-Speicher für weitere Big-Data Analytiken. Eine Back-up Applikation 33 macht rollierend Speicherabzüge vom Primärspeicher in einen Sekundärspeicher. Eine ERP-Applikation 34 greift auf die Daten des Primärspeichers zu, um beispielsweise bestimmte KPI (key performance indicator) zur Produktion zu berechnen. Allen Applikationen ist gemeinsam, dass sie einen Sekundärspeicher 37 nutzen, um Kopien der Daten des Primärspeichers oder Zwischenergebnisse dort abzulegen. Sekundärspeicher 37 soll ebenfalls physisch nicht als ein einziger Speicher verstanden werden. Auch er kann eine Reihe verschiedene Speichermedien, oder -mechanismen umfassen, wie beispielsweise eine Hadoop-Store 38, temporäre Speicherbereiche 39 oder Back-up Dateisysteme 40 usw. Die Applikationen 31-34 haben lesenden und/oder schreibenden Zugriff, dargestellt über den Pfeil 36.
Das Revisionsmodul 24 protokolliert - veranschaulicht durch den Pfeil 41 - alle Zugriffe einer Applikation auf den Primärspeicher 26. Das Revisionsmodul 24 protokolliert weiter und veranschaulicht durch den Pfeil 42 alle Zugriffe einer Applikation auf den Sekundärspeicher 37. Das Modul 24 generiert eine Log-Datei 25, in denen Details zum Zugriff und die Art der Benutzung der Daten mitgeschrieben werden. Verschiedene Log-Dateien 25 sind für die verschiedenen Systembetreiber (SO) vorgesehen. Beispielhaft zeigt Fig. 2 die Log-Dateien 25 für die Systembetreiber A (SO_A) und B (SO_B).

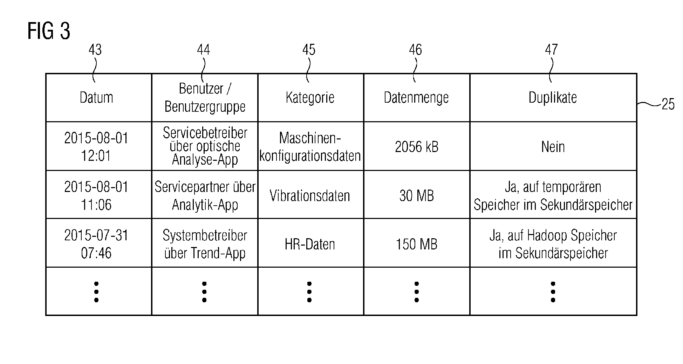

Fig. 3 zeigt beispielhaft einen möglichen Ausschnitt aus einer Log-Datei 25 für den Systembetreiber A. Der Zeitpunkt des Zugriffs auf ein Datum 43 wird notiert. In einem weiteren Eintrag wird der Benutzer/die Benutzergruppe 44 notiert, von dem/der der Zugriff erfolgte. Dies kann z.B. der Servicebetreiber, ein Partner des Servicebetreibers oder der Systembetreiber selbst sein. Ebenfalls erfolgt ein Eintrag über welche Applikation der Benutzer auf die Daten zugegriffen hat. Den Daten werden Datenkategorien 45 zugeordnet unter welchen diese in der Log-Datei geführt werden. Beispielhaft sind hier die Kategorien "Maschinen-Konfigurationsdaten", Vibrationdaten", "Human Ressource-Daten". Für jeden Eintrag in die Log-Datei wird zusätzlich die Datenmenge 46 der verarbeiteten Daten erfasst. Eine Information darüber ob Duplikate angefertigt worden sind und wenn ja, in welchem Speicher/Speicherbereich diese liegen liefert der Eintrag 47.

## Patentansprüche

1. System (100) zur Steuerung und/oder Analytik eines industriellen Prozesses (1), aufweisend anlagenseitig wenigstens eine Automatisierungs- oder Rechnereinheit (2, 5, 6, 7) eines Systembetreibers, wobei die wenigstens eine Automatisierungs- und Rechnereinheit erste Prozessgrößenberechnungen (19) durchführt und auf den Prozess (1) einwirkt, aufweisend anlagenextern eine Recheneinheit (9) eines vom Systembetreiber verschiedenen Servicebetreibers, wobei die anlagenexterne Recheneinheit wenigstens eine Applikation (31, 32, 33, 34, 35) aufweist und eine Anzahl zweiter Prozessgrößenberechnungen (14) durchführt und über die zweiten Prozessgrößenberechnungen direkt oder indirekt auf den Prozess einwirkt und wobei die anlagenexterne Recheneinheit über eine Datenverbindung (15) lokalen Daten (3, 4, 12, 19) von der wenigstens einen Automatisierungs- oder Rechnereinheit (2, 5, 6, 7) erhält und in einem Primärspeicher (26) speichert, **dadurch gekennzeichnet, dass** die anlagenexterne Recheneinheit (9) ein Revisionsmodul (24) aufweist, wobei das Revisionsmodul den Zugriff der wenigstens einen Applikation auf den Primärspeicher protokolliert.

2. System nach Anspruch 1 **dadurch gekennzeichnet, dass** die anlagenexterne Recheneinheit wenigstens einen Sekundärspeicher (37) zur Ausführung der Applikationen aufweist und das Revisionsmodul den Zugriff auf die Sekundärspeicher protokolliert.

3. System nach Anspruch 1 oder 2 **dadurch gekennzeichnet, dass** das Revisionsmodul eine Protokolldatei 25 umfasst, welche die Zugriffe mit wenigstens den Parametern "Benutzer", "Datenkategorie", "Vervielfältigung" protokolliert.

4. System nach einem der vorhergehenden Ansprüche, **dadurch gekennzeichnet, dass** die anlagenexterne Recheneinheit einen Zugriff auf das Revisionsmodul und/oder die Protokolldatei von außerhalb der anlagenseitigen Automatisierungs- und Rechnereinheit bereitstellt.

5. Anlagenexterne Recheneinheit eines Servicebetreibers zur Steuerung und/oder Analytik wenigstens eines industriellen Prozesses wenigstens eines Systembetreibers, wobei die anlagenexterne Recheneinheit wenigstens eine Applikationen (31, 32, 33, 34) aufweist und Prozessgrößenberechnungen (14) für den wenigstens einen industriellen Prozess durchführt und über wenigstens eine Datenverbindung (15) lokale Daten (3, 4, 12, 19) von wenigstens einer anlagenseitigen Automatisierungs- oder Rechnereinheit (2, 5, 6, 7) erhält, die in einem Primärspeicher (26) der anlagenexternen Recheneinheit abgelegt sind, **dadurch gekennzeichnet, dass** die anlagenexterne Recheneinheit wenigstens ein Revisionsmodul (24) aufweist, wobei das Revisionsmodul den Zugriff der wenigstens einen Applikation auf den Primärspeicher protokolliert.

6. Anlagenexterne Recheneinheit nach Anspruch 5, **dadurch gekennzeichnet, dass** die anlagenexterne Recheneinheit wenigstens einen Sekundärspeicher (37) zur Ausführung der Applikationen aufweist und das Revisionsmodul den Zugriff auf die Sekundärspeicher protokolliert.

7. Anlagenexterne Recheneinheit nach einem der Ansprüche 5 oder 6, **dadurch gekennzeichnet, dass** das Revisionsmodul eine Protokolldatei (25) umfasst, welche die Zugriffe mit wenigstens den Parametern "Benutzer", "Datenkategorie", "Vervielfältigung" protokolliert.

8. Anlagenexterne Recheneinheit nach einem der Ansprüche 5 bis 7 **dadurch gekennzeichnet, dass** die anlagenexterne Recheneinheit über Datenverbindungen (15) zu einer Mehrzahl von anlagenseitigen Automatisierungs- und Rechnereinheiten unterschiedlicher Systembetreiber verfügt und das Revisionsmodul die lokalen Daten der anlagenseitigen Automatisierungs- und Rechnereinheiten pro Systembetreiber protokolliert.

9. Anlagenexterne Recheneinheit nach Anspruch 8 **dadurch gekennzeichnet, dass** das Revisionsmodul pro Systembetreiber eine Protokolldatei (25) umfasst.
